# EUROPÄISCHE PATENTSCHRIFT

(11) **EP 2 785 491 B1**
(45) Veröffentlichungstag und Bekanntmachung des Hinweises auf die Patenterteilung: **22.05.2019**
(21) Anmeldenummer: 12797709.8
(22) Anmeldetag: 28.11.2012
(51) Int. Cl.: B23P 6/00, F01D 5/00, F01D 17/16, F04D 29/62, F04D 29/56, B23K 26/342, B23K 26/32, B23K 35/30, B23K 35/02

(54) **VERFAHREN ZUR REPARATUR EINER VARIABLEN LEITSCHAUFEL**
METHOD FOR REPAIRING A VARIABLE GUIDE VANE
PROCÉDÉ POUR RÉPARER UNE AUBE DIRECTRICE VARIABLE

(30) Priorität: 02.12.2011 DE 102011087665
(43) Veröffentlichungstag der Anmeldung: 08.10.2014
(73) Patentinhaber: Lufthansa Technik AG, 22335 Hamburg (DE)
(72) Erfinder: SCHÖN, Joachim, 25469 Halstenbek (DE); CZERNER, Stefan, 22767 Hamburg (DE); MÜLLER, Detlef, 21614 Buxtehude (DE)
(74) Vertreter: Müller Verweyen
(86) Internationale Anmeldenummer: PCT/EP2012/004913
(87) Internationale Veröffentlichungsnummer: WO 2013/079193

(56) Entgegenhaltungen:
- EP-A1- 1 403 397
- EP-A1- 1 686 239
- EP-A1- 1 927 670
- DE-A1- 4 415 783
- US-B1- 6 172 327
- DATABASE WPI Thomson Scientific, London, GB; AN 2010-B19164 XP002692989, "Corrosion and wear resistance method for movable guide vane shaft of hydraulic turbine unit, involves carrying out laser smelting processing and then smelting partial deep pit of flaw portions", -& CN 101 629 289 A (YUEYANG DALU LASER TECHNOLOGY) 20. Januar 2010 (2010-01-20)

## Beschreibung

Die Erfindung betrifft ein Verfahren zur Reparatur einer variablen Leitschaufel für eine Gasturbine mit den Merkmalen des Oberbegriffs von Anspruch 1.

Variable Leitschaufeln sind eine besondere Art von Leitschaufeln und im Kompressor von manchen Gasturbinen, insbesondere in bestimmten Flugzeugtriebwerken, vorgesehen. Sie sind um ihre Mittelachse drehbar eingebaut und können zwischen verschiedenen Stellungen hin- und hergedreht werden.

Variable Leitschaufeln bieten den Vorteil, dass zum Beispiel bei geringer Zufuhr von Außenluft für die Verbrennung, beispielsweise im Falle von niedriger Fluggeschwindigkeit eines Verkehrsflugzeugs, eine Drehung der variablen Leitschaufeln vorgenommen werden kann, um so eine optimierte Luftzufuhr zur Brennkammer zu erreichen.

Um die variablen Leitschaufeln mit benachbarten Bauteilen zu verbinden, weisen sie sogenannte rotationssymmetrische Anschlussbereiche auf. Diese rotationssymmetrischen Anschlussbereiche unterliegen einem erhöhten Verschleiß und müssen verhältnismäßig häufig repariert werden.

Dazu ist es aus offenkundiger Vorbenutzung bekannt und üblich, mittels Hochgeschwindigkeitsflammspritzen (HVOF) oder Plasmaspritzen die beschädigten Bauteilbereiche wieder aufzubauen und zu reparieren.

Jedoch weisen die so reparierten variablen Leitschaufeln eine reduzierte Verschleißfestigkeit auf, so dass sie im Einsatz umso schneller erneut verschleißen.

CN 101 629 289 A offenbart ein Verfahren zur Reparatur einer variablen Leitschaufel mit den Merkmalen des Oberbegriffs von Anspruch 1.

EP 1 927 670 A1 offenbart ein Verfahren zum Aufbringen einer abriebfesten Beschichtung auf Teile einer Gasturbine einschließlich einer variablen Leitschaufel. Die abriebfeste Beschichtung umfasst eine Hartrückschicht und eine Mehrzahl von Nanoschichten. Die Hartrückschicht weist eine Matrix aus einer metallischen Legierung auf. In die metallische Matrix sind Hartpartikel eingebracht, insbesondere Metall-Nitride, -Boride oder -Carbide. Die Nanoschichten können ebenfalls Metall-Nitride, -Boride oder -Carbide beinhalten. Der Auftrag der Hartrückschicht kann mittels stromlosem Abscheiden aus einem Bad, Hochgeschwindigkeits-Flammspritzen oder physikalischer Gasphasenabscheidung erfolgen. Der Auftrag der Nanoschichten erfolgt mittels physikalischer Gasphasenabscheidung.

US 6,172,327 offenbart ein sogenanntes verschränktes Laserschweißverfahren ("laser twist welding", LTW) zur Reparatur einer Schaufeleinheit für eine Gasturbine, wobei die Strahlen eines Metallpulver-haltigen Trägergases bereits in dem Schweißkopf mit dem Laserstrahl in einer Wechselwirkungszone zusammengeführt und von dort als verschränkter Laser-Trägergas-Pulver-Strahl koaxial durch die Düsenaustrittsöffnung zu dem Bauteil geführt werden.

EP 1 686 239 A1 offenbart ein weiteres Verfahren zur Reparatur einer variablen Leitschaufel für eine Gasturbine.

Der Erfindung liegt demnach die Aufgabe zugrunde, ein Verfahren zur Reparatur einer variablen Leitschaufel bereitzustellen, wodurch die Leitschaufel repariert und mit vergleichsweise verbesserten Verschleißeigenschaften versehen werden kann.

Zur Lösung der Aufgabe wird erfindungsgemäß ein Verfahren zur Reparatur einer variablen Leitschaufel für eine Gasturbine mit den Merkmalen des Anspruchs 1 vorgeschlagen.

Weiterbildungen der Erfindungen ergeben sich aus den abhängigen Ansprüchen.

Wie bereits eingangs ausgeführt, werden variable Leitschaufeln üblicherweise mittels Hochgeschwindigkeitsflammspritzen (HVOF) oder Plasmaspritzen repariert. Entgegen der bisherigen Ansicht, dass Laserstrahl-Auftragsschweißen prinzipiell aufgrund des hohen Wärmeeintrags für eine Reparatur nicht geeignet ist, wurde durch intensive Entwicklungen bewiesen, dass eine Reparatur von variablen Leitschaufeln durch Laser-Auftragsschweißen doch möglich ist. Das Laserstrahl-Auftragsschweißen wird dabei vorzugsweise so gesteuert, dass die eingebrachte Wärme in die variable Leitschaufel möglichst gering ist. Eine bevorzugte Möglichkeit, dies zu erreichen, umfasst eine auf die individuelle Beschädigung angepasste Reparatur.

Im Stand der Technik wird üblicherweise eine Plasmaspritzschicht stets über den gesamten Umfang (360°) aufgetragen, es wird also beispielsweise die komplette äußere Plattform (sog. "outer platform") oder der gesamte Kerbbereich (sog. "pin notch") der variablen Leitschaufel neu aufgebaut.

Die Beschichtung kann nur geringe Auftragshöhen in diesem Einsatzfall realisieren. Der Verbund der Spritzschicht zum Basismaterial hat eine zur erfindungsgemäßen Ausführung vergleichsweise geringe Haftfestigkeit. Zusätzlich muss das Werkstück üblicherweise spanabhebend vorbereitet und nachfolgend aufgeraut werden, um gleichmäßige Hafteigenschaften der Schicht sicherzustellen. Bei dem erfindungsgemäßen Verfahren treten diese Nachteile nicht oder zumindest weniger stark auf.

Bei einer bevorzugten Verfahrensausführung wird nur der Bereich der Beschädigung durch das Laserstrahl-Auftragsschweißen neu aufgebaut. Eine spanabhebende Vorarbeitung und ein Aufrauen sind nicht notwendig. Das Verfahren unterscheidet sich somit bereits von anderen Beschichtungsverfahren mit Vorarbeit. Beispielsweise wird nur ein Teilbereich (beispielsweise der äußeren Plattform oder des Kerbbereichs der variablen Leitschaufel) von 120°, also (nur) der Bereich, der von Erosion betroffen ist - und nicht die vollen 360° - durch das Verfahren wieder aufgefüllt. Anhand der Figuren wird dieser Aspekt an späterer Stelle noch weiter verdeutlicht.

Durch das Laserstrahl-Auftragsschweißen kann der Materialauftrag auf die variable Leitschaufel mit besonders hoher Qualität erfolgen.

Durch die vorgesehene reduzierte Aufbaubreite und den verringerten Wärmeeintrag weist das Bauteil nur einen vergleichsweise geringen Verzug auf, eine Nacharbeit ist somit weniger aufwendig. Das Reparaturverfahren weist zudem eine erhöhte Wirtschaftlichkeit im Vergleich zu den bekannten Verfahren auf. Des Weiteren kann vorzugsweise eine Kühlung der Reparaturbereiche vorgesehen sein.

Die variable Leitschaufel weist als Teilabschnitte Plattformen oder Zapfen auf, welche durch das Reparaturverfahren bevorzugt repariert werden, da gerade in diesen Bereichen erfahrungsgemäß der größte Verschleiß auftritt. Demnach erfolgt der Materialauftrag vorzugsweise auf die innere und/oder äußere Plattform der variablen Leitschaufel und weiterhin erfolgt der Materialauftrag auch bevorzugt auf den inneren und/oder äußeren Zapfen der variablen Leitschaufel.

Vorzugsweise umfasst der Materialauftrag das Aufbringen eines verschleißfesten Werkstoffs. Der Werkstoff des Zusatzmaterials ist demnach vorzugsweise nicht artgleich mit dem des Grundmaterials, sondern er ist bevorzugt hinsichtlich seiner Verschleißeigenschaften verbessert.

Zwar kann auch bereits durch artgleiches Material in Verbindung mit dem Laserstrahl-Auftragsschweißen eine vergleichsweise erhöhte Verschleißfestigkeit der reparierten variablen Leitschaufel erreicht werden, der Effekt kann jedoch durch bestimmte artfremde Werkstoffe noch weiter vergrößert werden.

Vorzugsweise umfasst der Materialauftrag das Aufbringen von Stellit oder Nitrid, vorzugsweise Titannitrid, Chromnitrid und/oder Bornitrid. Alternativ oder zusätzlich umfasst der Materialauftrag bevorzugt das Aufbringen von Hartstoffverbundschichten mit Carbiden, vorzugsweise Wolframcarbid oder Titancarbid. Die beschriebenen Werkstoffe eignen sich zur Erhöhung der Verschleißfestigkeit der reparierten Bauteilbereiche. Weiterhin kann der Materialauftrag in vorteilhaften Ausführungsformen auch Graphit umfassen, welches sich positiv auf Verschleiß- bzw. Schmiereigenschaften auswirkt.

Durch das Einbringen dieser Werkstoffe im Zuge der Reparatur wird die variable Leitschaufel gerade in der Region verstärkt, bei der sie an ihrem Einsatzort in der Gasturbine am meisten beansprucht und verschlissen wird. Diese gezielte Verstärkung der im Betrieb besonders beanspruchten Bereiche resultiert in einer variablen Leitschaufel, die für ihren spezifischen Einbauort angepasste und verbesserte Verschleißeigenschaften aufweist.

Bei einer Vorgehensweise, bei der mehrere Leitschaufeln parallel repariert werden, wird bei der ersten Leitschaufel eine Pause gemacht, und während dieser Pause wird die Reparatur an einer oder mehreren weiteren Leitschaufeln begonnen oder fortgesetzt. Erfindungsgemäß werden somit mehrere Materiallagen nacheinander auf die variable Leitschaufel aufgebracht und zwischen dem Aufbringen von zwei Materiallagen auf die variable Leitschaufel wird mindestens eine Materiallage auf mindestens eine weitere, vorzugsweise auf mindestens zwei weitere variable Leitschaufeln aufgebracht. Weiter bevorzugt wird mindestens eine Materiallage auf mindestens fünf weitere variable Leitschaufeln aufgebracht. Der Wärmeeintrag pro Schaufel kann auf diese Weise verringert werden, ohne dass die Prozesszeit dabei ansteigt. Typischerweise werden 5 bis 50, bevorzugt 5 bis 25, weiter bevorzugt 10 bis 20 variable Leitschaufeln simultan bearbeitet.

Vorzugsweise wird im Zuge des Verfahrens eine metallurgische Verbindung zwischen der variablen Leitschaufel und dem aufgebrachten Zusatzmaterial ausgebildet. Somit wird bevorzugt das Grundmaterial der variablen Leitschaufel mit dem Zusatzmaterial metallurgisch verbunden. Diese metallurgische Verbindung, die bevorzugt durch das Laserstrahl-Auftragsschweißen erzeugt wird, unterscheidet sich gegenüber der Verbindung, die durch bekannte Plasmaspritz-Verfahren erreicht werden kann.

Beim Flamm- oder Plasmaspritzen werden Partikel mit relativ hoher Geschwindigkeit auf eine Oberfläche gespritzt. Die Partikel bzw. Pulver werden an der Oberfläche des Werkstücks durch im Wesentlichen zwei Wechselwirkungen verbunden: Einerseits durch eine Verkrallung aufgrund von Deformation beim Auftreffen und andererseits durch lokale Verschweißung aufgrund von Kaltverschweißungen und/oder schmelzflüssigen Randzonen der Partikel beim Auftreffen.

Durch erfindungsgemäßen Einsatz des Laserstrahl-Auftragsschweißens können beispielsweise bei einer Schweißung von Nickel auf Nickel Zusatzwerkstoffe, beispielsweise Pulver, Draht und/oder Pasten, eingesetzt werden. Im Fall des Einsatzes von Pulvern bzw. Partikeln besteht im Gegensatz zum Flammspritzen die Besonderheit, dass bei Werkstoffen mit einer Komponente die Partikel bzw. bei Pulvern mit gleichem Schmelzpunkt (wie bei Nickel-Nickel-Verbindungen) die Pulver in der Regel vollständig in einem Schmelzbad aufgelöst werden.

Aus diesem schmelzflüssigen Bad heraus erstarrt der Werkstoff in der Regel durch Wärmeableitung in den Grundwerkstoff. Im metallographischen Querschliff ist folglich nach dem Schweißen die Korngröße der Ausgangspartikel nicht mehr detektierbar. Des Weiteren kommt es zu keiner Verkrallung (formschlüssigen Verbinden) wie beim Plasmaspritzen, sondern zu einer stoffschlüssigen Verbindung. Das heißt auf atomarer Ebene entstehen atomare Verbindungen von dem metallischen Schweißgut zum metallischen Grundkörper. Dieses wird dadurch unterstützt, dass Anteile des Grundwerkstoffs ebenfalls aufgeschmolzen werden.

Die metallische bzw. stoffschlüssige Verbindung des Laserstrahl-Auftragsschweißens ist in der Regel wesentlich fester als die zum Teil verkrallte und zum Teil verschweißte Spritzschicht. Zusätzlich weisen Plasma-Schichten in der Regel mehr Poren auf als ein gut eingestellter Schweißprozess. Ein gut eingestellter Schweißprozess bezeichnet hierbei einen bevorzugten Prozess, bei dem die Gaseinschlüsse die Schmelze vor der Erstarrung verlassen.

Erfindungsgemäß ist das Zusatzmaterial pulverförmig, vorzugsweise mit Pulverkorngrößen in einem Bereich zwischen 40 bis 150 *µ*m, weiter bevorzugt 50 bis 75 *µ*m. Erfahrungsgemäß sind mit diesen Pulvergrößen die besten Ergebnisse erzielbar. Erfindungsgemäß sind Pulverkorngrößen in einem Bereich zwischen 5 und 150 *µ*m des Zusatzmaterials geeignet.

Beim Laserstrahl-Auftragsschweißen wird vorzugsweise mit Pulver und/oder Draht als Zusatzwerkstoff gearbeitet. Durch die Zuführung in Pulver- und/oder Drahtform können geringere Porositäten und eine bessere Haftung als beim Hochgeschwindigkeitsflammspritzen erreicht werden.

Des Weiteren ist die Schichtfestigkeit aufgrund der geringeren Porenanzahl und der Erstarrung aus einer Schmelze heraus erhöht. Durch den Einsatz von Draht als Zusatzwerkstoff kann der Ausnutzungsgrad der Zusatzwerkstoffe nahezu 100 % erreichen, bei Pulvern ist ein Ausnutzungsgrad von 30 bis 95 % üblich. Ein hoher Ausnutzungsrad steigert die Wirtschaftlichkeit des Reparaturverfahrens.

Vorzugsweise wird die variable Leitschaufel in einer Schutzgasatmosphäre bearbeitet. Diese Gasumgebung ist vorzugsweise als nicht reaktives bzw. oxidierendes Gas ausgeführt. Vorzugsweise werden Argon und Helium vorgesehen.

Vorzugsweise werden mindestens zwei weitere variable Leitschaufeln in der Schutzgasatmosphäre zur Bearbeitung bereitgehalten. Auf diese Weise können mehrere variable Leitschaufeln parallel bearbeitet werden. Während beispielsweise eine oder zwei variable Leitschaufel(n) in der Abkühlphase sind, kann diese Zeit genutzt werden, um eine dritte variable Leitschaufel zu bearbeiten.

Der Einsatz einer entsprechend des oben beschriebenen Verfahrens reparierten variablen Leitschaufel für eine Gasturbine ist vorteilhaft, da sie gegenüber bekannten reparierten variablen Leitschaufeln eine erhöhte Verschleißfestigkeit und Lebensdauer aufweist. Eine solche variable Leitschaufel ist wirtschaftlicher, da sie hinsichtlich ihres spezifischen Verschleißes an den entsprechenden Stellen verstärkt ist und somit weniger häufig repariert werden muss.

Die Erfindung wird im Folgenden anhand bevorzugter Ausführungsformen unter Bezugnahme auf die beigefügten Figuren erläutert. Dabei zeigt:
- Fig. 1: eine Seitenansicht einer variablen Leitschaufel mit einer Beschädigung;
- Fig. 2: eine Draufsicht einer variablen Leitschaufel mit dargestellten Schweißlinien;
- Fig. 3: Darstellung einer Leitschaufelanordnung zum parallelen Schweißen an mehreren variablen Leitschaufeln;
- Fig. 4: eine bevorzugte linienweise Leitschaufelanordnung;
- Fig. 5: eine bevorzugte kreisbogenförmige Leitschaufelanordnung.

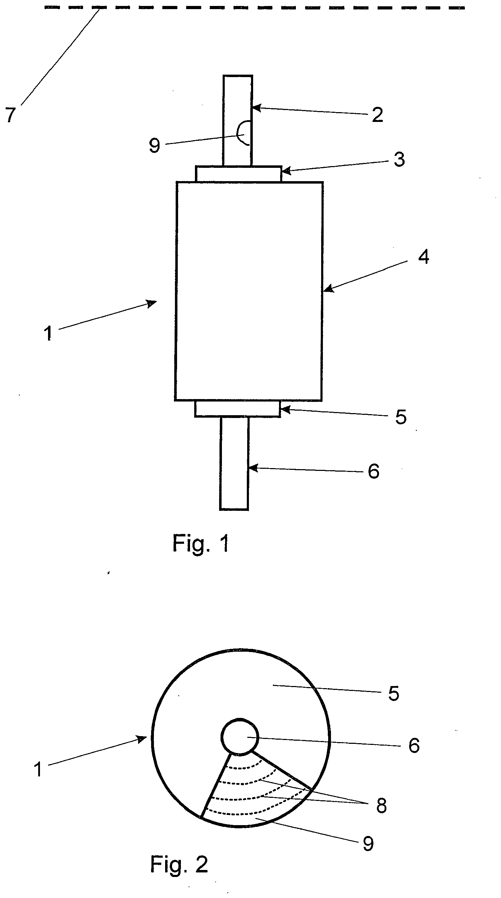

In der Figur 1 ist eine typische variable Leitschaufel 1 dargestellt. In Flugzeugtriebwerken kann eine Motorstufe eine Vielzahl von variablen Leitschaufeln 1 umfassen. Sie sind vorzugsweise äquidistant um die Motorsymmetrieachse 7 herum angeordnet.

Die variable Leitschaufel 1 kann in mehrere Abschnitte unterteilt werden. Die Mitte der Schaufel wird durch das Schaufelprofil 4 gebildet, dieses Schaufelprofil 4 bildet dabei den Strömungsbereich also den Abschnitt, um den im Betrieb Luft strömt.

Oberhalb und unterhalb des Schaufelprofils 4 ist jeweils eine Plattform angeordnet. Oben (im Hinblick auf die Motorsymmetrieachse 7) befindet sich die innere Plattform 3 und unten die äußere Plattform 5.

Wiederum oberhalb und unterhalb der Plattformen 3 und 5 sind die sog. Zapfen angeordnet. Die Zapfen sind in entsprechenden (nicht dargestellten) Buchsen drehbar gelagert, so dass die variable Leitschaufel 1 insgesamt im eingebauten Zustand um ihre eigene Achse drehbar ist. Oberhalb der inneren Plattform 3 ist der innere Zapfen 2 angeordnet und unterhalb der äußeren Plattform 5 ist der äußere Zapfen 6 angeordnet. Die Buchsen sind dabei im Vergleich zu den Zapfen 6 verhältnismäßig weich ausgebildet und unterliegen ebenso wie die Zapfen 6 einem Verschleiß, welcher durch einen mittels Laserstrahl-Auftragsschweißen bewirkten Materialauftrag ausgeglichen werden kann.

Die dargestellte variable Leitschaufel 1 weist im Bereich des inneren Zapfens 2 einen Verschleißbereich 9 auf. In diesem Bereich ist die variable Leitschaufel 1 verschlissen und muss repariert oder ausgetauscht werden.

In der Figur 2 ist eine variable Leitschaufel 1 in einer Draufsicht dargestellt. Bei dieser variablen Leitschaufel 1 ist ein Verschleißbereich 9 repariert und erneut aufgebaut worden. In mehrere Schweißlagen, dargestellt durch Schweißlinien 8, wurde ein Materialauftrag auf die variable Leitschaufel 1 aufgebracht. In diesem Fall wurde ein verschlissener Bereich der äußeren Plattform 5 repariert. Der Verschleißbereich 9 ist hier eine grubenartige Vertiefung, welche durch den lokalen Materialauftrag ausgeglichen werden kann. Dabei ist das bisher als nachteilig geltende Einbringen von hoher lokaler Energie durchaus von Vorteil, da dadurch das Grundmaterial angeschmolzen und mit dem aufgetragenen Material sehr gut verbindet. Dabei hat sich das Verfahren insbesondere für Abtrags- und Auftragshöhen von 0,05 bis 0,5 mm bei Wandstärken von 1,0 bis 3,0 mm, insbesondere im Bereich von 1,0 bis 2,0 mm bewährt. Dabei ist der lokale Wärmeeintrag insofern von Vorteil, da insbesondere rotationssymmetrische Bauteile besonders anfällig gegenüber Verformungen sind, welche bei einem großflächigeren Wärmeeintrag auftreten würden. Insbesondere tritt durch das erfindungsgemäß vorgeschlagene Verfahren keine Verwerfung bzw. Verzug des im Querschnitt kreisförmigen Zapfens 6 oder der Buchse auf, so dass die überarbeiteten Bauteile nach der Überarbeitung noch die erforderliche Zentrizität zueinander aufweisen.

Durch das erfindungsgemäße Verfahren ist es dabei möglich, die Reparatur nur auf den tatsächlich beschädigten Verschleißbereich 9 zu beschränken. Die aus dem Stand der Technik bekannten Verfahren sehen nur ein komplettes (360°) Abarbeiten und anschließendes Erneuern des betroffenen Abschnitts - also beispielsweise der äußeren Plattform - vor.

Wie im Beispiel der Figur 2 dargestellt, kann durch das erfindungsgemäße Verfahren auch nur ein Teilbereich eines Abschnitts, also beispielsweise ein Drittel (120°) der äußeren Plattform 5 abgearbeitet und neu aufgebaut werden.

Somit kann der eingebrachte Wärmeeintrag in die variable Leitschaufel reduziert werden. Zusätzlich kann durch Verwendung von speziellen - weiter oben ausführlich beschriebenen - Materialien, die Verschleißfestigkeit der reparierten variablen Leitschaufeln gesteigert werden.

Durch das ebenfalls weiter oben bereits beschriebene parallele Laserstrahl-Auftragsschweißen von mehreren variablen Leitschaufeln 1 kann der Wärmeeintrag in jede Leitschaufel noch weiter reduziert werden.

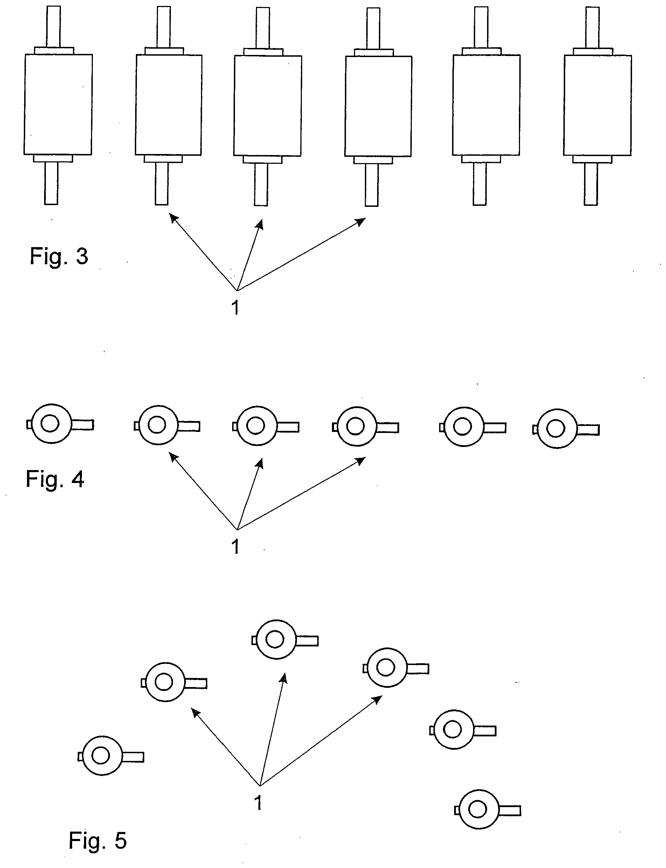

Die dazu eingesetzten bevorzugten Anordnungen von variablen Leitschaufeln 1 sind in den Figuren 3 bis 5 dargestellt.

Es können beispielsweise, wie dargestellt, sechs variable Leitschaufeln 1 gleichzeitig bearbeitet werden, vorzugsweise werden jedoch deutlich mehr, beispielsweise bis zu 50 variable Leitschaufeln 1 gleichzeitig bearbeitet.

Vorzugsweise werden mindestens so viele variable Leitschaufeln 1 gleichzeitig bearbeitet, dass der Laser kontinuierlich zur Bearbeitung genutzt werden kann. Das bedeutet, dass so viele variable Leitschaufeln gleichzeitig bearbeitet werden, dass bei dem Aufbringen einer zweiten, dritten, vierten, etc. Schweißlage die variable Leitschaufel 1 jeweils so viel Zeit zum Abkühlen hatte, dass der Wärmeeintrag für die Bauteileigenschaften im Wesentlichen unschädlich ist.

Durch eine entsprechend große Anzahl von variablen Leitschaufeln 1 kann somit der Wärmeeintrag pro Schaufel reduziert werden, ohne dass die Prozesszeit für die Reparatur pro Schaufel reduziert werden muss. Der eingesetzte Laser kann auf diese Weise kontinuierlich genutzt werden.

Für diese parallele Reparatur von mehreren variablen Leitschaufeln 1 sind insbesondere linienförmige Leitschaufelanordnungen wie in der Figur 4 und/oder kreisbogenförmige Leitschaufelanordnungen wie in der Figur 5 vorteilhaft. Für die im Gasturbinenbereich hohen Qualitätsanforderungen an die Bearbeitungsqualität ist es hierbei vorzugsweise vorgesehen, die Schaufeln in einer definierten Gasumgebung zu bearbeiten. Diese Gasumgebung ist vorzugsweise als nicht reaktives bez. oxidierendes Gas ausgeführt. Vorzugsweise werden Argon und Helium vorgesehen. Für die Sicherstellung der definierten Gasumgebung des Schweißprozesses werden Kammern vorgesehen. Diese Kammer wird bevorzugt linear oder ringförmig ausgeführt, um bei geringem Kammervolumen ein durch eine Linear- oder Drehachse realisierbare Verfahrbewegung innerhalb der Kammer realisieren zu können.

### Bezugszeichenliste:

- 1: Variable Leitschaufel
- 2: Innerer Zapfen
- 3: Innere Plattform
- 4: Schaufelprofil
- 5: Äußere Plattform
- 6: Äußerer Zapfen
- 7: Motorsymmetrieachse
- 8: Schweißlinien
- 9: Verschleißbereich

## Patentansprüche

1. Verfahren zur Reparatur einer variablen Leitschaufel (1) für eine Gasturbine, wobei im Zuge des Verfahrens durch einen Materialauftrag Zusatzmaterial auf die variable Leitschaufel (1) aufgebracht wird, wobei der Materialauftrag durch Laserstrahl-Auftragsschweißen erfolgt, wobei das Zusatzmaterial pulverförmig ist, **dadurch gekennzeichnet, dass** die Pulverkorngrößen des Zusatzmaterials in einem Bereich zwischen 5 bis 150 *µ*m sind, wobei mehrere Materiallagen nacheinander auf die variable Leitschaufel (1) aufgebracht werden und wobei zwischen dem Aufbringen von zwei Materiallagen auf die variable Leitschaufel (1) mindestens eine Materiallage auf mindestens eine weitere variable Leitschaufel (1) aufgebracht wird.

2. Verfahren nach Anspruch 1, **dadurch gekennzeichnet, dass** der Materialauftrag das Aufbringen eines verschleißfesten Werkstoffs umfasst.

3. Verfahren nach einem der vorangegangenen Ansprüche, **dadurch gekennzeichnet, dass** der Materialauftrag auf die innere und/oder äußere Plattform (3,5) der variablen Leitschaufel (1) erfolgt.

4. Verfahren nach einem der vorangegangenen Ansprüche, **dadurch gekennzeichnet, dass** der Materialauftrag auf den inneren und/oder äußeren Zapfen (2,6) der variablen Leitschaufel (1) erfolgt.

5. Verfahren nach einem der vorangegangenen Ansprüche, **dadurch gekennzeichnet, dass** der Materialauftrag das Aufbringen von Stellit oder Nitrid, vorzugsweise Titannitrid, Chromnitrid und/oder Bornitrid, umfasst.

6. Verfahren nach einem der vorangegangenen Ansprüche, **dadurch gekennzeichnet, dass** der Materialauftrag das Aufbringen von Hartstoffverbundschichten mit Carbiden, vorzugsweise Wolframcarbid oder Titancarbid, umfasst.

7. Verfahren nach einem der vorangegangenen Ansprüche, **dadurch gekennzeichnet, dass** zwischen dem Aufbringen von zwei Materiallagen auf die variable Leitschaufel (1) mindestens eine Materiallage auf mindestens zwei weitere, variable Leitschaufeln (1) aufgebracht wird.

8. Verfahren nach einem der vorangegangenen Ansprüche, **dadurch gekennzeichnet, dass** im Zuge des Verfahrens eine metallurgische Verbindung zwischen der variablen Leitschaufel (1) und dem aufgebrachten Zusatzmaterial ausgebildet wird.

9. Verfahren nach einem der vorangegangenen Ansprüche, **dadurch gekennzeichnet, dass** das Zusatzmaterial pulverförmig, vorzugsweise mit Pulverkorngrößen in einem Bereich zwischen 40 bis 150 *µ*m, weiter bevorzugt 50 bis 75 *µ*m, ist.

10. Verfahren nach einem der vorangegangenen Ansprüche, **dadurch gekennzeichnet, dass** die variable Leitschaufel (1) in einer Schutzgasatmosphäre bearbeitet wird.

11. Verfahren nach Anspruch 10, **dadurch gekennzeichnet, dass** mindestens zwei weitere variable Leitschaufeln (1) in der Schutzgasatmosphäre zur Bearbeitung bereitgehalten werden.

## Claims

1. Method of repairing a variable guide vane (1) for a gas turbine, wherein filler material is applied to the variable guide vane (1) by material application as part of the method, wherein the material is applied by laser beam build-up welding, wherein the filler material is in the form of a powder, **characterised in that** the powder particle sizes of the filler material is in a range of from 5 to 150 µm, wherein a plurality of material layers is applied to the variable guide vane (1) in succession, and wherein, between applying two material layers to the variable guide vane (1), at least one material layer is applied to at least one further variable guide vane (1).

2. Method according to claim 1, **characterised in that** the material application includes applying a wear-resistant material.

3. Method according to any of the preceding claims, **characterised in that** the material is applied to the inner and/or outer platform (3, 5) of the variable guide vane (1).

4. Method according to any of the preceding claims, **characterised in that** the material is applied to the inner and/or outer pin (2, 6) of the variable guide vane (1).

5. Method according to any of the preceding claims, **characterised in that** the material application includes applying stellite or nitride, preferably titanium nitride, chromium nitride and/or boron nitride.

6. Method according to any of the preceding claims, **characterised in that** the material application includes applying hard-material composite layers comprising carbides, preferably tungsten carbide or titanium carbide.

7. Method according to any of the preceding claims, **characterised in that**, between applying two material layers to the variable guide vane (1), at least one material layer is applied to at least two further variable guide vanes (1).

8. Method according to any of the preceding claims, **characterised in that** a metallurgical bond is produced as part of the method between the variable guide vane (1) and the filler material that is applied.

9. Method according to any of the preceding claims, **characterised in that** the filler material is in the form of a powder, preferably having powder particle sizes in a range of from 40 to 150 µm, more preferably 50 to 75 µm.

10. Method according to any of the preceding claims, **characterised in that** the variable guide vane (1) is processed in an inert gas atmosphere.

11. Method according to claim 10, **characterised in that** at least two further variable guide vanes (1) are kept available in the inert gas atmosphere for processing.

## Revendications

1. Procédé pour réparer une aube directrice (1) variable pour une turbine à gaz, du matériau supplémentaire étant, au cours du procédé, appliqué sur l'aube directrice (1) variable par une application de matériau, l'application de matériau étant effectuée par soudage de rechargement par rayon laser, le matériau supplémentaire étant pulvérulent, **caractérisé en ce que** les dimensions de grains de poudre du matériau supplémentaire s'inscrivent dans une plage de 5 à 150 µm, plusieurs couches de matériau étant appliquées successivement sur l'aube directrice (1) variable, et au moins une couche de matériau étant appliquée sur au moins une autre aube directrice (1) variable entre l'application de deux couches de matériau sur l'aube directrice (1) variable.

2. Procédé selon la revendication 1, **caractérisé en ce que** l'application de matériau comprend l'application d'une matière résistant à l'usure.

3. Procédé selon l'une des revendications précédentes, **caractérisé en ce que** l'application de matériau s'effectue sur la plateforme (3, 5) intérieure et extérieure de l'aube directrice (1) variable.

4. Procédé selon l'une des revendications précédentes, **caractérisé en ce que** l'application de matériau s'effectue sur le tourillon (2, 6) intérieur et/ou extérieur de l'aube directrice (1) variable.

5. Procédé selon l'une des revendications précédentes, **caractérisé en ce que** l'application de matériau comprend l'application de stellite ou de nitrure, de préférence de nitrure de titane, de nitrure de chrome et/ou de nitrure de bore.

6. Procédé selon l'une des revendications précédentes, **caractérisé en ce que** l'application de matériau comprend l'application de couches de composite de matériaux durs contenant des carbures, de préférence du carbure de tungstène ou du carbure de titane.

7. Procédé selon l'une des revendications précédentes, **caractérisé en ce que**, entre l'application de deux couches de matériau sur l'aube directrice (1) variable, au moins une couche de matériau est appliquée sur au moins deux autres aubes directrices (1) variables.

8. Procédé selon l'une des revendications précédentes, **caractérisé en ce que**, au cours du procédé, une liaison métallurgique est constituée entre l'aube directrice (1) variable et le matériau supplémentaire appliqué.

9. Procédé selon l'une des revendications précédentes, **caractérisé en ce que** le matériau supplémentaire est pulvérulent, de préférence avec des dimensions de grains de poudre dans une plage de 40 à 150 µm, plus préférablement de 50 à 75 µm.

10. Procédé selon l'une des revendications précédentes, **caractérisé en ce que** l'aube directrice (1) variable est traitée dans une atmosphère inerte.

11. Procédé selon la revendication 10, **caractérisé en ce qu'**au moins deux autres aubes directrices (1) variables sont tenues à disposition pour le traitement dans l'atmosphère inerte.
